# DEMANDE DE BREVET EUROPEEN

(11) **EP 2 659 989 A2**
(43) Date de publication de la demande: **06.11.2013**
(21) Numéro de dépôt: 13166193.6
(22) Date de dépôt: 02.05.2013
(51) Int. Cl.: B08B 3/02, A47L 11/40

(54) **Nettoyeur autonome**

(30) Priorité: 02.05.2012 FR 1254017
(71) Demandeur: BCPE La Norme, 34400 Lunel (FR)
(72) Inventeur: Hetreux, François, 31870 BEAUMONT SUR LEZE (FR)
(74) Mandataire: Cornuejols, Georges

(57) **Abrégé**

Le dispositif (105) de nettoyage autonome comporte :
- un châssis (110) muni d'au moins deux roulettes (155),
- un support (115) dans ce châssis pour un réservoir d'eau (120),
- un support (150) dans ce châssis pour une alimentation électrique (130, 190),
- un support (150) dans ce châssis pour une pompe (125, 195) alimentée électriquement par ladite alimentation électrique et propulsant de l'eau en provenant du réservoir d'eau,
- un support dans ce châssis pour une perche reliée à ladite pompe et
- au moins un moyen d'amortissement (230) formant un ressort agissant en compression pour amortir le passage du châssis d'une première position, par rapport aux roulettes à une deuxième position par rapport aux roulettes, et pour compenser partiellement le poids du dispositif lors du passage du châssis de la deuxième position vers la première position.

## Description

### Domaine de l'invention

La présente invention concerne un nettoyeur autonome. Elle s'applique, en particulier, au domaine des nettoyeurs autonomes à usages professionnels et ou particulier, pour nettoyer des grandes surfaces en hauteur de type vitrages ou panneaux solaires.

### Arrière-plan technologique

Il est connu de nettoyer des surfaces avec des perches munies de brosses et de réservoirs d'eau projetée sur ces surfaces. Cependant, les systèmes connus ne sont pas autonomes et nécessitent un branchement à un réseau électrique et/ou hydraulique.

### BREVE DESCRIPTION DE L'INVENTION

La présente invention vise à remédier à tout ou partie de ces inconvénients.

A cet effet, selon un premier aspect, la présente invention vise un dispositif de nettoyage autonome, qui comporte :
- un châssis muni d'au moins deux roulettes,
- un support dans ce châssis pour un réservoir d'eau,
- un support dans ce châssis pour une pompe alimentée électriquement par ladite alimentation électrique et propulsant de l'eau en provenant du réservoir d'eau et
- au moins un moyen d'amortissement formant un ressort pour amortir le passage du châssis d'une première position, par rapport aux roulettes à une deuxième position par rapport aux roulettes, et pour compenser partiellement le poids du dispositif lors du passage du châssis de la deuxième position vers la première position.

Grâce à ces dispositions, d'une part, le dispositif de nettoyage est autonome puisqu'il emporte, sur son châssis, une alimentation électrique et un réservoir d'eau et, d'autre part, peuvent changer de position, par exemple pour être rangés ou transportés dans un véhicule léger. L'utilisateur de ce dispositif est, grâce aux moyens d'amortissement, soulagé d'une part, d'avoir à retenir le mouvement de descente du dispositif vers sa deuxième position et, d'autre part, d'une partie de l'effort à produire pour amorcer la transition vers la première position. Par exemple, l'une des positions est adaptée à l'utilisation du dispositif et l'autre des positions est adaptée au transport et/ou au déplacement du dispositif.

Dans des modes de réalisation, au moins un moyen d'amortissement forme un ressort agissant en compression.

Grâce à ces dispositions, la mise en oeuvre de l'invention est facilitée puisqu'il suffit de prévoir un ressort qui est comprimé lors du passage de la première position du dispositif à la deuxième position du dispositif et qui se détend lors du passage de la deuxième position à la première position.

Dans des modes de réalisation, la première position est une position dans laquelle le dispositif est en équilibre et vertical et la deuxième position est une position dans laquelle le dispositif est en équilibre et horizontal.

Dans des modes de réalisation, l'ensemble de moyens d'amortissement est configuré pour que, lors du basculement du dispositif avec le réservoir d'eau contenant 80 litres d'eau, les efforts à exercer par un utilisateur pour tenir le dispositif dans chacune de ses positions entre la première position et la deuxième position soit inférieurs à 250 Newton.

Dans des modes de réalisation, chaque moyen d'amortissement est configuré pour faire effectuer une rotation d'un angle compris entre 10° et 30° au dispositif, entre la position complètement détendue dudit moyen d'amortissement et la position complètement contractée dudit moyen d'amortissement.

Dans des modes de réalisation, chaque moyen d'amortissement est configuré pour faire effectuer une rotation d'un angle compris entre 15° et 25° au dispositif, entre la position complètement détendue dudit moyen d'amortissement et la position complètement contractée dudit moyen d'amortissement.

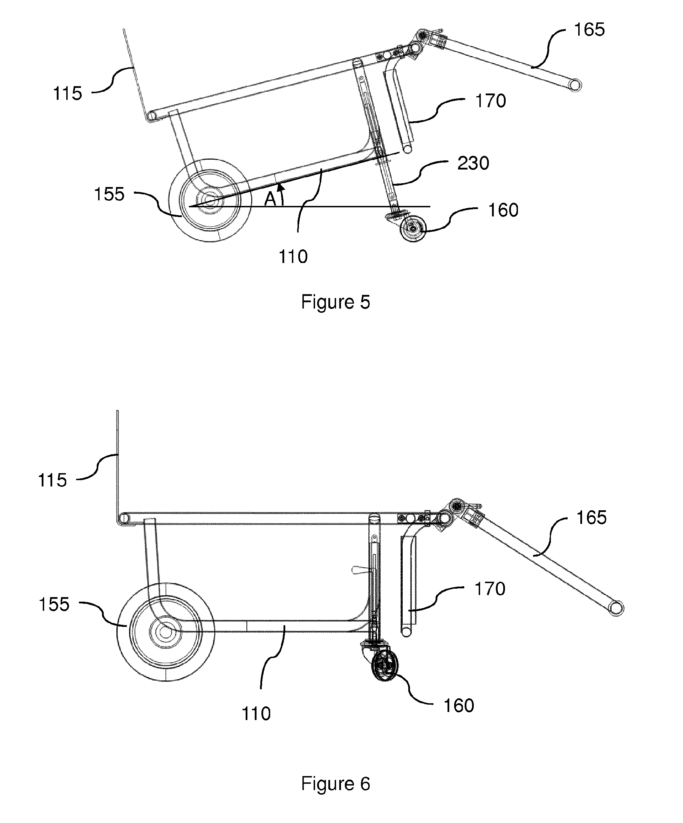

Grâce à ces dispositions, on obtient un bon compromis entre l'efficacité du moyen de compression, qui augmente avec la valeur de l'angle A et la compacité du dispositif dont l'encombrement augmente avec l'angle A ainsi que le risque de flambage du moyen de compression 230, qui augmente avec l'angle A. En positionnant les masses pour que le centre de gravité du dispositif avec un réservoir plein soit placé, par rapport à l'horizontale, à un angle d'environ 40° à 50° par rapport au point de contact de la roue 155, lorsque les moyens d'amortissement 230 sont compressés (figure 6), le débattement angulaire des moyens de compression 230, entre 15° et 25°, permet de réduire le moment du poids d'un tiers à la moitié entre les positions extrêmes de ce débattement angulaire.

Dans des modes de réalisation, chaque moyen d'amortissement est associé à au moins une roulette pour en amortir le déplacement relatif au châssis, le dispositif comportant au moins trois roulettes.

Dans des modes de réalisation, chaque moyen d'amortissement se trouve entre une roulette et le châssis.

Dans des modes de réalisation, le dispositif comporte un moyen de déplacement de chaque moyen d'amortissement et un moyen de verrouillage en position sortie de chaque moyen d'amortissement.

Grâce à ces dispositions, le moyen de verrouillage peut être escamoté, par rétractation, par exemple dans un pied portant une roulette, dans une position verticale du dispositif puis, avant de basculer le dispositif en position horizontale, on sort le moyen d'amortissement et on le verrouille pour qu'il fournisse la fonction d'amortissement.

Dans des modes de réalisation, au moins un moyen d'amortissement est composé d'un ressort à gaz.

Grâce à ces dispositions, le moyen d'amortissement est particulièrement léger.

Dans des modes de réalisation, le dispositif objet de l'invention comporte l'alimentation électrique composée d'au moins une valisette amovible contenant une batterie.

Dans des modes de réalisation, le dispositif objet de l'invention comporte la pompe dans une valisette amovible.

Grâce à chacune de ces dispositions, on peut extraire l'alimentation électrique et/ou la pompe, pour manipuler le dispositif, notamment lorsqu'on le range ou qu'on le charge dans un véhicule ou pour utiliser la pompe pour une autre application, par exemple pour transférer de l'eau ou vider une piscine. On réduit ainsi l'intensité des efforts à exercer.

Dans des modes de réalisation, le dispositif objet de l'invention comporte un enrouleur d'un tuyau relié à la pompe, d'une part, et à la perche, d'autre part.

Dans des modes de réalisation, le dispositif objet de la présente invention comporte, en outre :
- un support (150) dans ce châssis pour une alimentation électrique et/ou
- un support dans ce châssis pour une perche reliée à ladite pompe.

Selon un deuxième aspect, la présente invention vise un procédé de nettoyage autonome mettant en oeuvre un dispositif comportant :
- un châssis muni d'au moins deux roulettes,
- un support dans ce châssis pour un réservoir d'eau,
- un support dans ce châssis pour une pompe alimentée électriquement par ladite alimentation électrique et propulsant de l'eau en provenant du réservoir d'eau et
- au moins un moyen d'amortissement formant un ressort ;
   dans lequel ledit procédé comporte :
   - une étape d'amortissement, par chaque moyen d'amortissement, du passage du châssis d'une première position, par rapport aux roulettes à une deuxième position par rapport aux roulettes, et
   - une étape de compensation partielle, par chaque moyen d'amortissement, du poids du dispositif lors du passage du châssis de la deuxième position vers la première position.

### BREVE DESCRIPTION DES DESSINS

D'autres avantages, buts et caractéristiques de la présente invention ressortiront de la description qui va suivre faite, dans un but explicatif et nullement limitatif, en regard des dessins annexés, dans lesquels :
- la figure 1 représente, en vue en élévation, un mode de réalisation particulier du dispositif objet de la présente invention,
- la figure 2 représente une valisette ouverte comportant des batteries,
- la figure 3 représente une valisette ouverte comportant une pompe,
- la figure 4 représente, partiellement, le dispositif illustré en figure 1, au début d'une étape de basculement, après écartement de roulettes secondaires,
- la figure 5 représente, partiellement, le dispositif illustré en figures 1 et 4, en cours de basculement,
- la figure 6 représente, partiellement, le dispositif illustré en figures 1, 4 et 5, en fin de basculement,
- la figure 7 représente des moyens de retenue d'un moyen d'amortissement, dans deux positions,
- la figure 8 représente un moyen d'amortissement et les éléments associés dans le dispositif de nettoyage illustré en figures 1 à 7,
- les figures 9 et 10 représentent, en vue de dessus et en vue en coupe verticale, un réservoir d'eau pour le dispositif illustré en figures 1 à 8 et
- la figure 11 représente, sous forme de logigramme, des étapes d'un mode d'utilisation du dispositif objet de la présente invention.

### DESCRIPTION DETAILLEE DE MODES DE REALISATION DE L'INVENTION

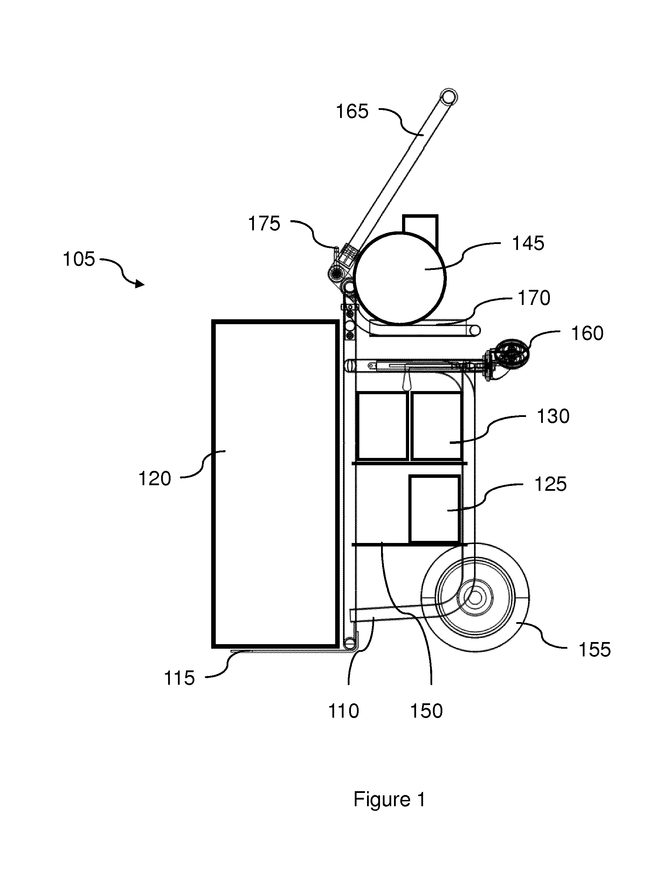

On observe, en figure 1, un dispositif de nettoyage 105 basé sur un châssis 110 muni de roulettes principales 155 et de roulettes secondaires 160. Le dispositif a une forme générale de diable, en « L », une surface support 115, ou bavette, définissant, avec les roulettes principales 155 une première position d'équilibre, verticale, utilisée pendant les phases de nettoyage. Les quatre roulettes 155 et 160 définissent, pour le dispositif 105, une deuxième position d'équilibre, horizontale, utilisée pour le rangement du dispositif ou son chargement dans un véhicule.

Le châssis est, par exemple, réalisé en tubulures mécano soudée de diamètres 30 et 25 mm en acier inoxydable.

Le support 115 est adapté à supporter un réservoir d'eau 120 ayant la forme générale d'un parallélépipède rectangle. Le réservoir 120 a, par exemple, une contenance de 80 litres Il est aussi homologué pour contenir de l'eau de qualité alimentaire. Préférentiellement, le support 115 est repliable le long du châssis 110.

Entre les roulettes principales 155, les roulettes secondaires 160 et le réservoir 120 se trouvent deux étagères 150 formant supports pour, d'une part, une valisette 125 comportant une pompe et, d'autre part, deux valisettes 130 comportant, chacune, des batteries électriques.

Une poignée supérieure 165, solidaire d'une étagère supérieure 170 portant un enrouleur 145, permet la manipulation aisée du dispositif 105. En option, la tablette 170 permet de fixer une alimentation 220 V/ 12V. La rotation de la poignée 165 et de la tablette 170 permet l'accès à l'emplacement des valisettes de batteries 130.

Un support (non représenté) en forme de tulipe permet de lover une rallonge sans utiliser l'enrouleur.

Une poignée de verrouillage 175 permet le verrouillage de la poignée supérieure 165 par rapport au châssis 110. L'enrouleur 145 offre une extension de 15 m de tuyau d'eau et permet l'enroulage d'un tuyau souple allant de la pompe 125 à une perche (non représentée) supportée sur le côté du châssis 110. Un autre tuyau (non représenté) va du réservoir 120 à la valisette de pompe 125. La valisette de pompe 125 est alimentée par la valisette de batteries 130 sous la commande d'un interrupteur (non représenté).

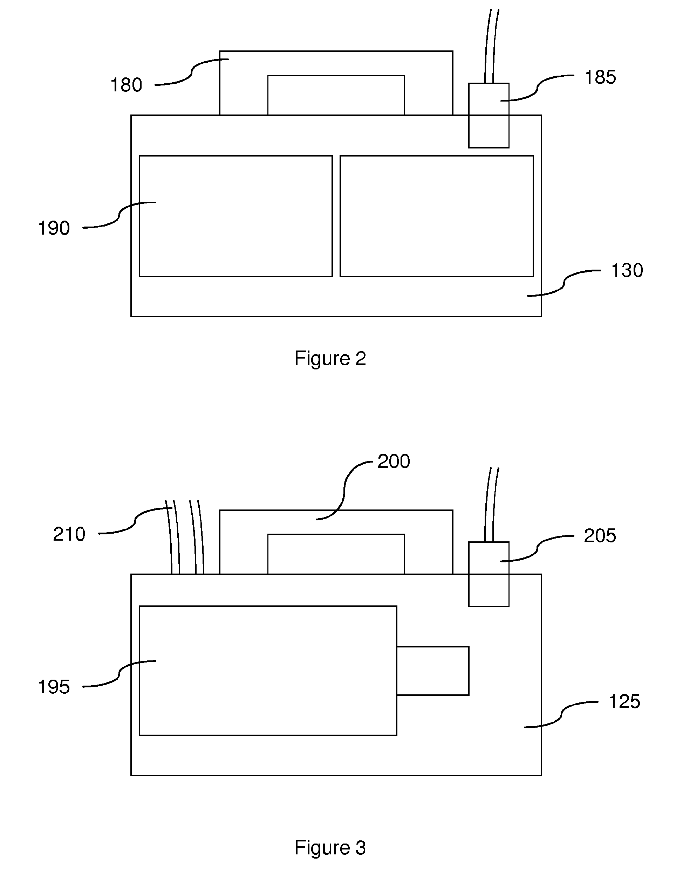

Comme illustré en figure 2, la valisette de batterie 130 comporte une poignée 180 et contient deux batteries 190. Une liaison étanche 185 permet la sortie de câbles électriques d'alimentation de la valisette de pompe 125. Chaque valisette de batteries 130 a une autonomie de 3,5 heures, ce qui donne une journée de travail, soit 7 heures, pour deux valisettes de batteries 130. En ce qui concerne l'alimentation électrique, on note que, alternativement aux batteries, l'utilisateur peut brancher la pompe sur un convertisseur optionnel de tension alternative 115 ou 230 Volts en 12 Volts continu ou sur une connexion électrique 12 V de véhicule.

Comme illustré en figure 3, la valisette de pompe 125 comporte une poignée 200 et une pompe 195. Une liaison étanche 205 permet l'entrée des câbles électriques d'alimentation. Deux tuyaux 210 servent à l'entrée d'eau, depuis le réservoir 120 et à la sortie d'eau vers la perche. La pompe 195 possède un débit de 120 litres par heure.

Chaque valisette 125 et 130 présente une étanchéité IP 65, ce qui permet d'utiliser la pompe 195 pour vider une cale d'un bateau, par exemple, tout en assurant une grande sécurité électrique.

Les valisettes 125 et 130 sont, en effet, extractibles très facilement du dispositif 105, de manière à pouvoir être couplées et utilisées indépendamment pour d'autres applications. Par exemple, ces valisettes peuvent êtres utilisées, seules, pour transférer de l'eau ou vider une piscine. Les valisettes sont en plastique injecté. Elles sont étanche classe IP65 (étanche à la poussière et aux jets d'eau). Cette sécurité répond aux normes du travail pour l'usage professionnel. Elle offre une protection pour le matériel dans de multiples conditions d'utilisation.

On note que la pompe 195 peut aussi être alimentée par une alimentation de véhicule, par exemple par l'intermédiaire d'une connexion de type « allume cigare ».

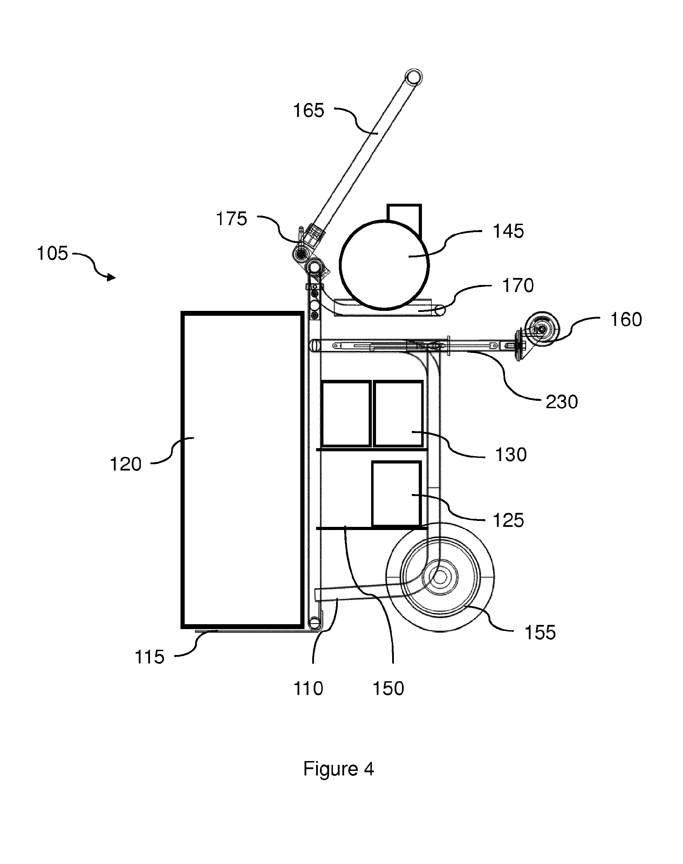

On retrouve, en figure 4, des éléments de la figure 1, dans une configuration où les roulettes 160 sont écartées du châssis 110. Cette configuration est celle du dispositif 105 en début de basculement depuis la position verticale vers la position horizontale.

On retrouve, en figure 5, les éléments de la figure 4, dans une configuration oblique, dans laquelle les roulettes 160 commencent à toucher le sol, pendant le basculement depuis la position verticale vers la position horizontale. Comme on le comprend aisément, si le réservoir est plein, le centre de gravité du dispositif 105 est sensiblement au dessus des roulettes principales 155, si bien que les efforts réalisés jusqu'à cette position par l'utilisateur sont limités. De plus, la poignée 165 forme un bras de levier réduisant encore ces efforts. Si le réservoir est vide, ou retiré, le poids du dispositif est réduit et la manipulation est aussi très aisée.

On retrouve, en figure 6, les éléments de la figure 5, dans une configuration où les roulettes secondaires 160 sont, de nouveau, rapprochées du châssis 110. Cette configuration est celle du dispositif 105 en fin de basculement depuis la position verticale vers la position horizontale.

Entre la position de la figure 5 et celle de la figure 6, un moyen d'amortissement reliant les roulettes secondaires 160 au châssis 110 ont amorti le mouvement et réduit les efforts de rappel exercés par l'utilisateur.

Dans des modes de réalisation, chaque moyen d'amortissement est configuré pour faire effectuer une rotation d'un angle A (illustré en figure 5) compris entre 10° et 30° au dispositif 105, entre la position complèbment détendue dudit moyen d'amortissement 230 (figure 5) et la position complètement contractée dudit moyen d'amortissement 230 (figure 6).

Dans des modes de réalisation, l'angle A est compris entre 15° et 25°.

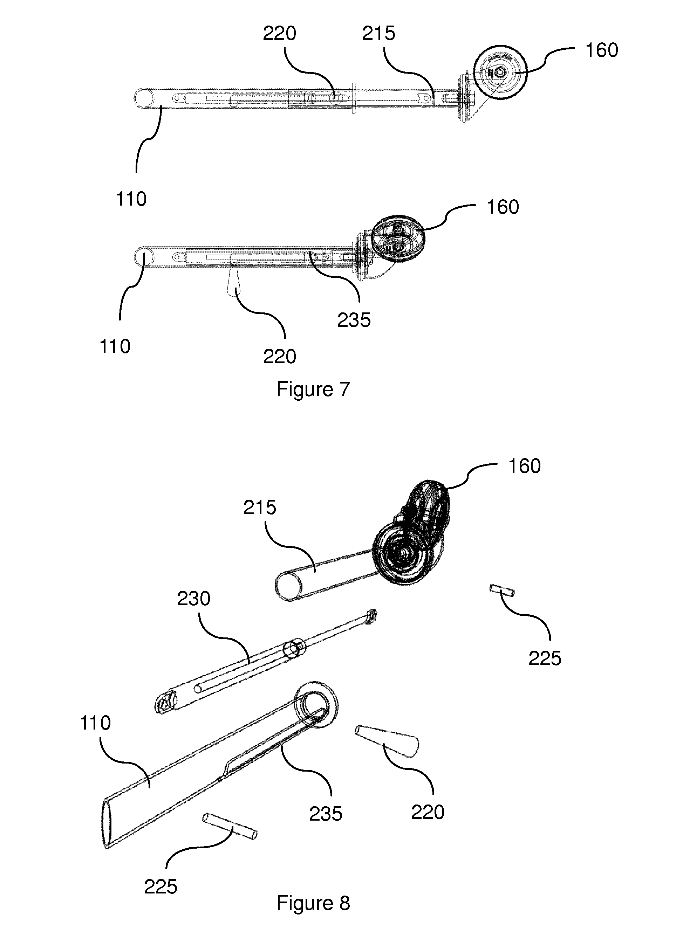

Les figures 7 et 8 illustrent les éléments constitutifs de ces moyens d'amortissement. On retrouve, dans ces figures, une roulette secondaire 160 et une partie du châssis 110 formant un tube pour supporter un pied 215 solidaire de la roulette secondaire 160. Un moyen d'amortissement, ici un ressort à gaz ou un compensateur 230 est retenu, à l'une de ses extrémités, dans le pied du châssis 110 et, à son autre extrémité, au pied 215 de la roulette secondaire 160. Des goujons 225, par exemple rivetés, sont utilisés à cet effet.

Dans le mode de réalisation illustré dans les figures, plusieurs moyens d'amortissement 230 sont mis en oeuvre. Cependant, dans d'autres modes de réalisation, un seul moyen d'amortissement est mis en oeuvre, par exemple sur un support de plusieurs roulettes.

Les moyens d'amortissement 230 sont destinés à compenser partiellement ou en totalité l'effet du poids d'éléments mobiles que l'on souhaite manoeuvrer entre deux positions limites. Chaque moyen d'amortissement 230 est ici composé d'une enceinte cylindrique, remplie de gaz sous pression et d'huile, à l'intérieur de laquelle coulisse un ensemble piston / tige. Le gaz sous pression (azote) communique à la tige une poussée, donnant à l'ensemble le comportement d'un ressort agissant en compression. Contrôlée sur toute sa longueur par l'intermédiaire d'un système de piston à labyrinthe, la vitesse de sortie de la tige est ralentie de façon hydraulique en fin de course.

Une manette latérale 220 est solidaire du pied 215 et permet de déplacer un moyen d'amortissement 230, avec la roulette secondaire 160 qu'il porte, depuis la position rentrée illustrée en figure 1 à la position sortie illustrée en figure 4. Cette manette 220 se déplace, à cet effet, dans une gorge 235 du pied du châssis 110. Cette gorge 235 présente une forme en « L » pour permettre le verrouillage du pied 215 en chacune de ses positions extrêmes, par rotation de la manette 220 autour de l'axe du pied 215. La course entre les deux positions extrêmes mesure, par exemple, 150 mm.

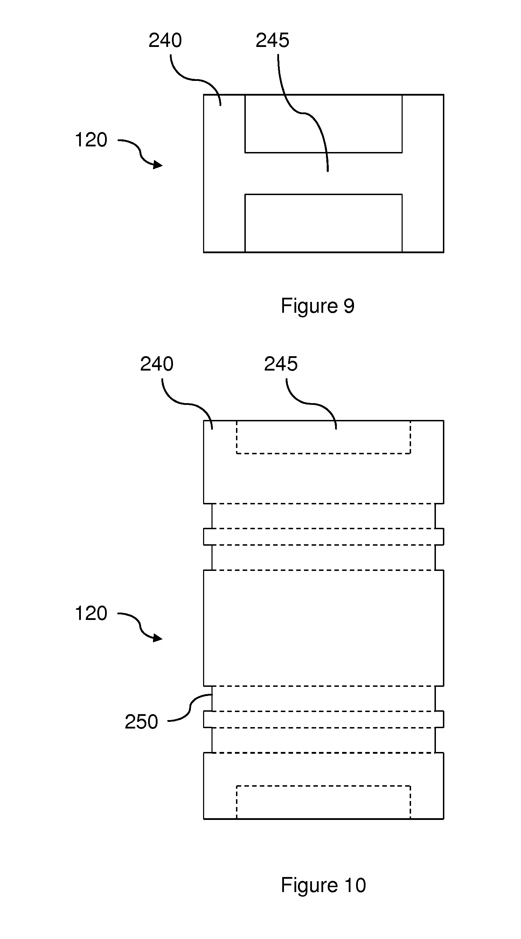

Comme illustré en figures 9 et 10, un réservoir 110 présente, en partie haute et en partie basse, des renforts latéraux 240 et un renfort central 245. Des nervures 250 sont formées sur les flancs du réservoir 120. On note que chaque réservoir 120 est en matériau ayant un agrément alimentaire « ACS ». Plusieurs tels réservoirs sont empilables et gerbables par 4 sur une palette au format européen. De plus, ses formes avec nervures 250 assure, d'une part, une grande rigidité, d'autre part, une capacité de cerclage et, enfin, une capacité de jonction mâle-femelle lors de l'empilage. On note que, si une source d'eau est disponible, le dispositif 105 peut fonctionner sans réservoir, grâce à un tuyau (non représenté) supplémentaire.

Les moyens d'amortissement permettent de réduire les efforts, lors du basculement du dispositif avec un réservoir 120 plein de 80 lites d'eau, afin que ces efforts restent inférieurs à 250 Newton.

La poignée 165 est pivotante, avec l'étagère 205, par rapport au châssis 110 pour augmenté l'accessibilité aux valisettes et réduire la dimension hors-tout du dispositif lors de son rangement ou de son chargement dans un véhicule. La poignée 165 possède aussi un frein de roue (non représenté) pour bloquer les roulettes 155.

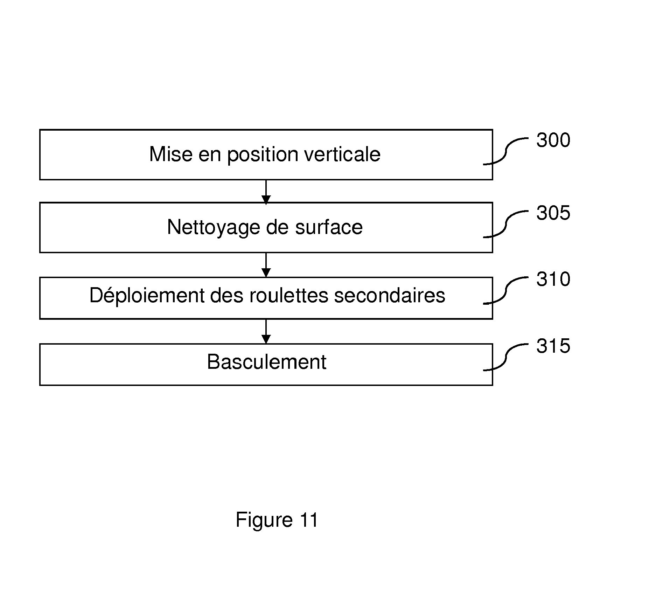

Comme représenté en figure 11, pour mettre le dispositif en position, l'utilisateur le redresse dans sa position verticale, au cours d'une étape 300. Au cours de cette étape, chaque moyen d'amortissement effectue une étape de compensation partielle du poids du dispositif lors du passage du châssis de la deuxième position vers la première position.

Le nettoyage des surfaces est réalisé à l'aide de perches munies de brosses sur lesquelles l'eau pure (produite par osmose) est projetée sans pression, au cours d'une étape 305.

Puis, après cette phase de nettoyage, pour charger le dispositif 105 dans un véhicule, par exemple utilitaire, l'utilisateur déploie, d'abord, au cours d'une étape 310, les roulettes secondaires 160.

Puis, au cours d'une étape 315, l'utilisateur bascule le dispositif d'abord jusqu'à la position illustrée en figure 5, sans amortissement, puis depuis cette position jusqu'à la position illustrée en figure 6, avec amortissement par compression du moyen d'amortissement 230.

Le procédé de nettoyage autonome objet de la présente invention met ainsi en oeuvre un dispositif comportant :
- un châssis muni d'au moins deux roulettes,
- un support dans ce châssis pour un réservoir d'eau,
- un support dans ce châssis pour une pompe alimentée électriquement par ladite alimentation électrique et propulsant de l'eau en provenant du réservoir d'eau et
- au moins un moyen d'amortissement formant un ressort.

Le procédé objet de la présente invention comporte :
- une étape 300 de compensation partielle, par chaque moyen d'amortissement, du poids du dispositif lors du passage du châssis de la deuxième position vers la première position.
- une étape 315 d'amortissement, par chaque moyen d'amortissement, du passage du châssis d'une première position, par rapport aux roulettes à une deuxième position par rapport aux roulettes.

Chaque moyen d'amortissement 230 forme un ressort, agissant préférentiellement en compression, pour amortir le passage du châssis d'une première position, par rapport aux roulettes à une deuxième position par rapport aux roulettes, et pour compenser partiellement le poids du dispositif lors du passage du châssis de la deuxième position vers la première position.

Ainsi, on minimise l'effort de l'utilisateur lorsque le serveur est basculé : de la position à l'équilibre et verticale (première position) vers la position à l'équilibre et horizontale (deuxième position), la fin de course est amortie. De la position horizontale (deuxième position) vers la position verticale (première position), le décollage est assisté.

D'une part, le dispositif de nettoyage est autonome puisqu'il emporte, sur son châssis, une alimentation électrique et un réservoir d'eau et, d'autre part, peuvent changer de position, par exemple pour être rangés ou transportés dans un véhicule léger. L'utilisateur de ce dispositif est, grâce aux moyens d'amortissement, soulagé d'une part, d'avoir à retenir le mouvement de descente du dispositif vers sa deuxième position et, d'autre part, d'une partie de l'effort à produire pour amorcer la transition vers la première position. Par exemple, l'une des positions est adaptée à l'utilisation du dispositif et l'autre des positions est adaptée au transport et/ou au déplacement du dispositif.

Dans les modes de réalisation dans lesquels au moins un moyen d'amortissement forme un ressort agissant en compression, la mise en oeuvre de l'invention est facilitée puisqu'il suffit de prévoir un ressort qui est comprimé lors du passage de la première position du dispositif à la deuxième position du dispositif et qui se détend lors du passage de la deuxième position à la première position.

## Revendications

1. Dispositif (105) de nettoyage autonome, **caractérisé en ce qu'il** comporte :
- un châssis (110) muni d'au moins deux roulettes (155),
- un support (115) dans ce châssis pour un réservoir d'eau (120),
- un support (150) dans ce châssis pour une pompe (125, 195) alimentée électriquement par ladite alimentation électrique et propulsant de l'eau en provenant du réservoir d'eau et
- au moins un moyen d'amortissement (230) formant un ressort agissant en compression pour amortir le passage du châssis d'une première position, par rapport aux roulettes à une deuxième position par rapport aux roulettes, et pour compenser partiellement le poids du dispositif lors du passage du châssis de la deuxième position vers la première position.

2. Dispositif (105) selon la revendication 1, dans lequel au moins un moyen d'amortissement forme un ressort agissant en compression.

3. Dispositif (105) selon l'une des revendications 1 ou 2, dans lequel la première position est une position dans laquelle le dispositif est en équilibre et vertical et la deuxième position est une position dans laquelle le dispositif est en équilibre et horizontal.

4. Dispositif (105) selon l'une des revendications 1 à 3, dans lequel l'ensemble de moyens d'amortissement est configuré pour que, lors du basculement du dispositif avec le réservoir d'eau contenant 80 litres d'eau, les efforts à exercer par un utilisateur pour tenir le dispositif dans chacune de ses positions entre la première position et la deuxième position soit inférieurs à 250 Newton.

5. Dispositif (105) selon l'une des revendications 1 à 4, dans lequel chaque moyen d'amortissement est configuré pour faire effectuer une rotation d'un angle compris entre 10 et 30 au dispositif, entre la position complètement détendue dudit moyen d'amortissement et la position complètement contractée dudit moyen d'amortissement.

6. Dispositif (105) selon l'une des revendications 1 à 4, dans lequel chaque moyen d'amortissement est configuré pour faire effectuer une rotation d'un angle compris entre 15° et 25° au dispositif, entre la position complètement détendue dudit moyen d'amortissement et la position complètement contractée dudit moyen d'amortissement.

7. Dispositif (105) selon l'une des revendications 1 à 6, dans lequel chaque moyen d'amortissement (230) est associé à au moins une roulette (160) pour en amortir le déplacement relatif au châssis, le dispositif comportant au moins trois roulettes.

8. Dispositif (105) selon la revendication 7, dans lequel chaque moyen d'amortissement (230) se trouve entre une roulette (160) et le châssis (110).

9. Dispositif (105) selon l'une des revendications 1 à 8, qui comporte un moyen de déplacement (220) de chaque moyen d'amortissement (230) et un moyen (235) de verrouillage en position sortie de chaque moyen d'amortissement.

10. Dispositif (105) selon l'une des revendications 1 à 9, dans lequel au moins un moyen d'amortissement (230) est composé d'un ressort à gaz.

11. Dispositif (105) selon l'une des revendications 1 à 10, qui comporte une alimentation électrique composée d'au moins une valisette amovible (130) contenant une batterie (190).

12. Dispositif (105) selon l'une des revendications 1 à 11, qui comporte la pompe (195) dans une valisette amovible (125).

13. Dispositif (105) selon l'une des revendications 1 à 12, qui comporte un enrouleur (145) d'un tuyau relié à la pompe, d'une part, et à la perche, d'autre part.

14. Dispositif (105) selon l'une des revendications 1 à 13, qui comporte, en outre :
- un support (150) dans ce châssis pour une alimentation électrique (130, 190) et/ou
- un support dans ce châssis pour une perche reliée à ladite pompe.

15. Procédé de nettoyage autonome mettant en oeuvre un dispositif comportant :
- un châssis muni d'au moins deux roulettes,
- un support dans ce châssis pour un réservoir d'eau,
- un support dans ce châssis pour une pompe alimentée électriquement par ladite alimentation électrique et propulsant de l'eau en provenant du réservoir d'eau et
- au moins un moyen d'amortissement formant un ressort ;
**caractérisé en ce qu'il** comporte :
- une étape d'amortissement, par chaque moyen d'amortissement, du passage du châssis d'une première position, par rapport aux roulettes à une deuxième position par rapport aux roulettes, et
- une étape de compensation partielle, par chaque moyen d'amortissement, du poids du dispositif lors du passage du châssis de la deuxième position vers la première position.
